# EUROPÄISCHE PATENTSCHRIFT

(11) **EP 2 464 556 B1**
(45) Veröffentlichungstag und Bekanntmachung des Hinweises auf die Patenterteilung: **22.01.2014**
(21) Anmeldenummer: 10751826.8
(22) Anmeldetag: 06.08.2010
(51) Int. Cl.: B61L 15/00, B61L 25/02, G01M 17/08

(54) **VERFAHREN UND ELEKTRONISCHE EINRICHTUNG ZUR ZUSTANDSÜBERWACHUNG VON BAUTEILEN BEI SCHIENENFAHRZEUGEN**
METHOD AND ELECTRONIC DEVICE TO MONITOR THE STATUS OF COMPONENTS OF RAILWAY VEHICLES
PROCÉDÉ ET DISPOSITIF ÉLECTRONIQUE POUR SURVEILLER L'ÉTAT DE COMPOSANTS DANS DES VÉHICULES FERROVIAIRES

(30) Priorität: 14.08.2009 DE 102009037637
(43) Veröffentlichungstag der Anmeldung: 20.06.2012
(73) Patentinhaber: KNORR-BREMSE Systeme für Schienenfahrzeuge GmbH, 80809 München (DE)
(72) Erfinder: HERDEN, Marc-Oliver, 81377 München (DE); FRIESEN, Ulf, 85579 Neubiberg (DE); AMFT, Michael, 81825 München (DE)
(74) Vertreter: Mattusch, Gundula
(86) Internationale Anmeldenummer: PCT/EP2010/061469
(87) Internationale Veröffentlichungsnummer: WO 2011/018416

(56) Entgegenhaltungen:
- EP-A1- 0 795 454
- EP-A1- 1 213 202
- EP-A1- 1 264 754
- DE-A1- 19 529 986
- DE-A1- 19 836 081
- WILTSCHKO T ET AL: "BORDAUTONOME ORTUNG VON SCHIENENFAHRZEUGEN MIT MAP-MATCHING-TECHNOLOGIE//BOARD-AUTONOMOUS TRAIN POSITIONING BY MAP-MATCHING TECHNOLOGY", ZEVRAIL - GLASERS ANNALEN, GEORG SIEMENS VERLAG, BERLIN, DE, Bd. 129, Nr. 6/07, 1. Juni 2005 (2005-06-01), Seiten 268-275, XP001229840, ISSN: 1618-8330

## Beschreibung

Die vorliegende Erfindung betrifft ein Verfahren sowie eine elektronische Einrichtung zur Zustandsüberwachung eines Bauteils eines Schienenfahrzeuges, in dem Sensoren zur Erfassung von auf die Bauteile einwirkenden Belastungen betrieben werden, deren Messwerte als Eingangswerte an einer Auswerteeinheit zur Analyse des Verschleißzustandes geleitet werden, wobei hierfür auch die aktuelle Position des Schienenfahrzeuges signalverarbeitet wird. Ferner betrifft die Erfindung auch ein hiermit im Zusammenhang stehendes Computerprogrammprodukt.

Im Schienenfahrzeugverkehr werden vermehrt Diagnose- und Überwachungssystem eingesetzt, bei denen verschiedenste Messgrößen erfasst, bewertet und gespeichert werden. Unter anderem werden heute neben der zum Betrieb des Schienenfahrzeuges notwendigen Erfassung der Messgrößen des Antriebs- und Bremssystems, wie Geschwindigkeiten, Drücke, Ströme und Spannungen, auch immer mehr Messwerte zur Diagnose einzelner Subsysteme und Komponenten erfasst und gespeichert. Hintergrund dabei ist, neben der Gewährleistung der geforderten Funktionalität eine bessere Beurteilung des Verschleißzustandes von Bauteilen vornehmen zu können, um deren Lebensdauer besser auszunutzen.

Ein Schienenfahrzeug ist im Betrieb nicht als in sich abgeschlossenes System zu betrachten. Denn es wird immer durch die Interaktion mit der jeweiligen Strecke beeinflusst. Durch die Erfassung verschiedener Messgrößen im Fahrzeug, wie beispielsweise Temperaturen und Beschleunigungen, kann auch auf die Umgebungsbedingungen und natürlich auf den Streckenzustand geschlossen werden, insbesondere Adhäsion im Rad-Schiene-Kontakt oder Schienenschäden. Die Kenntnis der Position und damit eine Zuordnung zu einem definierten Punkt einer Strecke werden dabei unmittelbar vorausgesetzt. Dafür werden derzeit Zusatzgeräte benötigt, die die erforderlichen Positionsinformationen liefern.

Aus der DE 102 33 527 B4 geht ein Verfahren zur Zustandsdiagnose und Überwachung von Bauteilen eines Schienenfahrzeuges, nämlich Radsatzführungsvorrichtungen, hervor, bei welchen durch Auswertung eines aktuell gemessenen Beschleunigungssignals und dessen zweimaliger Integration eine Abschätzung eines Wegsignals vorgenommen wird. Dieses Wegsignal wird dann als Zustandsgröße zur Beschreibung einer Koordinate der aktuellen räumlichen Lage des jeweiligen Radsatzes bezüglich anderer Bauteile herangezogen.

Des Weiteren offenbart die EP 0 795 454 A1 ein Verfahren zur Eigenortung eines spurgeführten Fahrzeugs, welches auf einer Korrelation von ortsabhängig ermittelten Beschleunigungsspektren einer aktuellen Fahrt und einer früheren Fahrt des Schienenfahrzeugs basiert. Hierbei stellen die Beschleunigungsspektren ein für die gefahrene Strecke und für ein bestimmtes Fahrzeug spezifisches Rüttelprofil der Strecke dar, welches in einer internen Datenbank in Form eines Referenzspeichers hinterlegt und mit aktuell gemessenen Beschleunigungsspektren zur Positionsbestimmung des Schienenfahrzeugs korreliert wird.

Darüber hinaus offenbart die EP 1 213 202 A1 ein Verfahren zur Abbildung eines Geleisezustandes und/oder des mechanischen Betriebsverhaltens von Schienenfahrzeugen. Dazu sind auf einzelenen Schienenfahrzeugen Sensoren vorgesehen, die auftretende Beanspruchungen in Signale umformen. Aus den Signalen werden mit einem Sensormodul und mit einer vorzugsweise auf der Zugkomposition befindlichen Auswerteinheit Informationseinheiten generiert, die je nach Häufung und Verteilung als Abbild des Gleiszustandes oder als Abbild des Betriebszustandes genommen werden. Die Informationseinheiten werden über eine Funkstrecke zu einer Leitstelle übertragen. Jede mit einer Vorrichtung zur Durchführung des Verfahrens ausgestattete Zugkomposition wird dadurch zu einem Messzug und erlaubt in der Leitstelle insbesondere eine aktuelle Anzeige des Geleisezustandes der betreffenden Streckenabschnitte.

Ferner offenbart die DE 601 18 501 T2 ein Verfahren und eine Vorrichtung zur Ortung eines Schienenfahrzeugs, bei denen die Geschwindigkeit des Fahrzeugs auf einem Schienenweg zu unterschiedlichen Zeitpunkten bestimmt wird und aufgrund einer Berechnung nach einem speziellen Algorithmus anhand einer Datenbank die aktuelle Position des Schienenfahrzeugs ermittelt wird. Dabei sind in dieser Datenbank neben geometrischen Merkmalen weitere Daten hinterlegt, die durch Messen einer Trägheitsgröße bei einem vorherigen Durchgang des Fahrzeugs längs des Wegs aufgenommen wurden.

Aus der DE 198 36 081 A1 geht eine technische Lösung zur Früherkennung von Schäden an Schienenfahrzeugen hervor. Diese Zustandsüberwachung beruht auf einer Analyse ungewöhnlicher Geräusche oder Schwingungen, welche Schäden am Schienenfahrzeug ankündigen. Es werden die besonderen Beanspruchungen ausgesetzten Bauteile, wie Radsätze, durch Sensoren überwacht. Die Sensoren liefern aktuelle Schall- und Schwingungswerte, die mit entsprechenden Referenzwerten daraufhin verglichen werden, ob sie innerhalb vorgegebener Grenzen liegen. Diese Referenzwerte sind in einem Referenzspeicher hinterlegt und wurden zuvor aus einer Vielzahl von entsprechenden aktuellen Messwerten ermittelt. Die Referenzwerte gelten für diejenigen Streckenpunkte an denen sie zuvor entstanden sind. Um einen Bezug zwischen aktuellen Schall- und Schwingungswerten und den entsprechenden Referenzwerten herzustellen, werden die Referenzwerte mehrfach abgerufen und zwar immer dann, wenn die Sensoren Fahrzeugkomponenten den betreffenden Streckenpunkt passieren und die den aktuellen Sensormeldungen generieren. Die Zuordnung der aktuellen Sensorsignale zu den entsprechenden Referenzsignalen geschieht durch Lesezeiger, die entsprechend dem Vorrücken des Fahrzeugs auf der Strecke vorschaltbar sind.

Im Stand der Technik wird zur Gewinnung der Positionsinformationen auf Zusatzgeräte, wie GPS-Empfänger (GPS = Global Position System) zurückgegriffen.

Nachteilhaft bei diesem Stand der Technik ist, dass das GPS-Signal nicht ständig im Schienenfahrzeug verfügbar ist, und selbst bei Vorhandensein nicht immer ein brauchbares Signal liefert, beispielsweise bei Tunneldurchfahrten, welche in gebirgigen Gegenden über weite Strecken verlaufen können. Des Weiteren sind in vielen Streckennetzen, wie beispielsweise bei U-Bahnen, systembedingt nur beschränkte Sende- und Empfangsmöglichkeiten gegeben und damit eine GPS-Ortung nur sehr eingeschränkt nutzbar.

Um diese Problematik zu beherrschen ist im allgemeinen Stand der Technik auch eine andere Möglichkeit zur Ermittlung der aktuellen Position des Schienenfahrzeuges bekannt, bei der direkt in die Strecke eingebaute induktiv wirkende Positionsmarken dem Schienenfahrzeug die Information über definierte Wegpunkte übermitteln.

Jedoch unterliegt auch diese technische Lösung einem zusätzlichen Geräteaufwand, der bei der Projektierung des Schienenfahrzeuges sowie der Strecke einzuplanen ist.

Es ist daher die Aufgabe der vorliegenden Erfindung, ein Verfahren sowie eine elektronische Einrichtung zur Zustandsüberwachung von Bauteilen zu schaffen, deren Positionsdatengewinnung in einfacher Weise und zuverlässig erfolgt.

Die Aufgabe wird ausgehend von einem Verfahren gemäß dem Oberbegriff von Anspruch 1 in Verbindung mit dessen kennzeichnenden Merkmalen gelöst. Hinsichtlich einer hierzu korrespondierenden elektronischen Einrichtung wird auf Anspruch 6 verwiesen. Ein Computerprogrammprodukt ist in Anspruch 11 angegeben.

Die Erfindung schließt die verfahrenstechnische Lehre ein, dass die aktuelle Geschwindigkeit v des Schienenfahrzeuges über die Zeit t aufgezeichnet wird, woraus ein v-t-Profil erstellt wird, das mit einem hinterlegten v-t-Profil korreliert wird, um durch einen stochastischen Abgleich beider Profile die aktuelle Position des Schienenfahrzeuges für die Zustandsüberwachung zu bestimmen. Zweckmäßigerweise wird hierbei mit einem hinterlegten v-t-Profil in Form eines Strecken/Haltestellen-Profils korreliert.

Mit anderen Worten besteht der grundsätzliche Erfindungsgedanke also darin, durch eine Korrelation des Geschwindigkeitsprofils mit dem Strecken/Haltestellen-Profil eine Positionsbestimmung herbeizuführen.

Der Vorteil der erfindungsgemäßen Lösung liegt insbesondere darin, dass keine weiteren technischen Geräte zur Lieferung von Positionsdaten an die Auswerteeinheit zur Zustandsüberwachung und Verschleißzustandsanalyse von Bauteilen und der Strecke erforderlich sind. Vielmehr werden Positionsinformationen ausschließlich signalverarbeitungstechnisch gewonnen, also berechnet. Weil Schienenfahrzeuge meist auf festen Strecken mit festen Haltestellen verkehren, lassen sich die der Erfindung zu Grunde liegenden Zuordnungskriterien ableiten. Aus dem Profil der Stillstandszeiten kann die Auswerteeinheit, wenn diese über eine datenmäßige Landkarte gelegt werden, bestimmen, auf welcher Strecke das Schienenfahrzeug gefahren ist und wann es sich ungefähr wo befunden hat, wie oft es zwischen den Haltestellen verzögert hat und wo sich beispielsweise im Gleisbett Stellen mit generell schlechter Adhäsion befinden. Stillstandszeiten entsprechen Haltestellenposition, an der die Geschwindigkeit Null ist, während einer fahrplanmäßig festgelegten Aufenthaltsdauer in der Haltestelle. Hierdurch lassen sich Datensätze erstellen, die mittels einfacher statistischer Methoden zur Zustandsüberwachung auswertbar sind.

Im Rahmen der vorliegenden Erfindung ist es auch denkbar, dass dem hinterlegten v-t-Profil datensatzmäßig weitere durch Sensoren ermittelte und auf die Bauteile wirkende Belastungsdaten zugeordnet werden. So können als weitere Belastungsdaten die auf die Radsätze des Schienenfahrzeugs einwirkenden Beschleunigungen aufgezeichnet werden, um hierüber fehlerhafte Streckenabschnitte zu identifizieren. Es lässt sich sogar eine Prognose erstellen, wann etwa ein fehlerhafter Streckenabschnitt eine Verschleißgrenze erreicht hat und anhand dieser Informationen können fehlerhafte Streckenabschnitte vor dem Totalausfall bereits präventiv ausgebessert werden, weit bevor aufwendige technische Reparaturen notwendig sind.

Gemäß einer die Erfindung verbessernden Maßnahme wird vorgeschlagen, dass als Aufzeichnungsgerät für die aktuelle Geschwindigkeit des Schienenfahrzeuges über die Zeit der sowieso im Schienenfahrzeug vorhandene zentrale Datenlogger verwendet wird. Hierdurch wird eine weitere gerätetechnische Einsparung erzielt. Der zentrale Datenlogger eines Schienenfahrzeugs ist darauf eingerichtet, gemessene und berechnete Fahrzeugdaten entlang ihres zeitlichen Verlaufs aufzuzeichnen. Daneben wird vorgeschlagen, dass für die erfindungsgegenständlichen Vergleichszwecke verwendete Strecken-Haltestellen-Profil des Schienenfahrzeugs ebenfalls im Datenlogger oder in der Auswerteeinheit für die Zustandsüberwachung zu hinterlegen. Das Strecken/Haltestellen-Profil beinhaltet im einfachsten Falle den zeitlichen Verlauf der Geschwindigkeit des Schienenfahrzeugs entlang seiner Fahrtstrecke gemäß des geltenden Fahrplans unter Berücksichtigung von Geschwindigkeitsbegrenzungen auf der Strecke. Daneben ist es auch möglich, ein Strecken/Haltestellen-Profil durch statistische Analyse historischer gemessener v-t-Profile zu bestimmen.

Weitere, die Erfindung verbessernde Maßnahmen werden nachstehend gemeinsam mit der Beschreibung eines bevorzugten Ausführungsbeispiels anhand der Figuren näher dargestellt. Es zeigt:
- Fig.1: ein schematisches Blockschaltbild einer elektronischen Einrichtung zur Zustandsüberwachung, und
- Fig.2: eine grafische Darstellung des Vergleichs zwischen v-t-Profil und dem hinterlegten Strecken/Haltestellen-Profil des Schienenfahrzeuges.

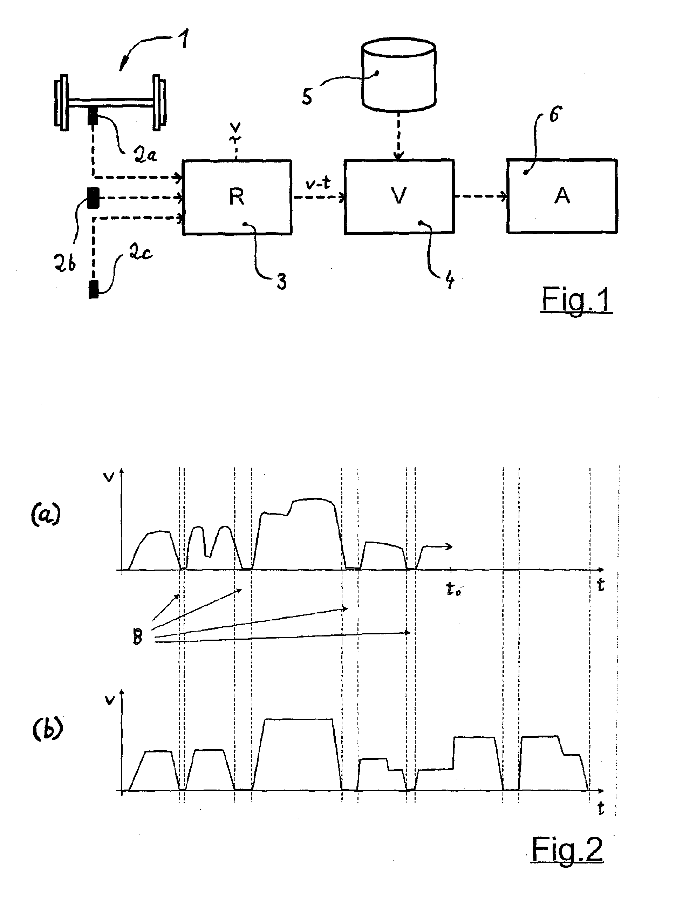

Gemäß Fig. 1 besteht eine elektronische Einrichtung zur Zustandsüberwachung von Bauteilen 1 eines - nicht weiter dargestellten - Schienenfahrzeuges im Wesentlichen aus mehreren Sensoren 2a-2c, die auf die Bauteile 1 einwirkende Belastungen erfassen. Exemplarisch ist der Sensor 2a hier als ein Beschleunigungssensor ausgelegt, welcher die auf einen Radsatz als Bauteil 1 während der Fahrt einwirkenden Stöße detektiert.

Die so gewonnen Messwerte gehen als Eingangswerte zunächst einer Aufzeichnungseinheit 3 zu, welche die aktuelle Geschwindigkeit v des Schienenfahrzeuges von einer - nicht weiter dargestellten - Fahrzeugsteuerung bezieht und über die Zeit t aufzeichnet. Die Aufzeichnungseinheit 3 erstellt hieraus ein v-t-Profil des Schienenfahrzeuges, das als Eingangssignal einer nachgeschalteten Vergleichseinheit 4 zugeht. Die Vergleichseinheit 4 bezieht von einer Speichereinheit 5 aus ein dort hinterlegtes v-t-Profil in Form eines Strecken/Haltestellen-Profil des Schienenfahrzeugs, das anhand des Fahrplans der aktuellen Strecke bestimmt wurde. Durch einen stochastischen Abgleich beider Profile werden Übereinstimmungen ermittelt, die die Vergleichseinheit 4 einer nachgeschalteten Auswerteeinheit 6 zur Verfügung stellt. Die Auswerteeinheit 6 dient der Zustandsüberwachung und der Analyse des Verschleißzustandes von Bauteilen 1 des Schienenfahrzeuges.

Wie in Fig.2 dargestellt, erfolgt der Vergleich des v-t-Profils (a) mit dem Strecken/Haltestellen-Profil (b), indem in den durch Strichlinien gekennzeichneten Bereichen B im Verlauf der Zeit t Übereinstimmungen bestimmt werden. Der Bereich B kennzeichnet hier Stillstandszeiten des Schienenfahrzeugs, an denen die Geschwindigkeit v gleich null ist. Durch eine solche Überdeckung der beiden Profile lässt sich über das Referenzprofil (b) rückschließen, an welcher aktuellen Position sich das Schienenfahrzeug zum augenblicklichen Zeitpunkt to tatsächlich befindet. Die so gewonnene aktuelle Position des Schienenfahrzeuges kann durch die Auswerteeinheit 6 zur ortsbasierenden Zustandsüberwachung unter Einbeziehung der über die Sensoren 2a-2c gewonnenen Messwerte verwendet werden.

### Bezugszeichenliste

- 1: Bauteil
- 2: Sensor
- 3: Aufzeichnungseinheit
- 4: Vergleichseinheit
- 5: Speichereinheit
- 6: Auswerteeinheit

- a: v-t-Profil (Geschwindigkeits-Zeit-Profil)
- b: Strecken/Haltestellen-Profil
- t: Zeit
- t₀: aktueller Zeitpunkt
- v: Geschwindigkeit
- B: Bereich

## Patentansprüche

1. Verfahren zur Zustandsüberwachung von Bauteilen (1) eines Schienenfahrzeuges, in dem Sensoren (2a-2c) zur Erfassung von auf die Bauteile (1) einwirkenden Belastungen betrieben werden, deren Messwerte als Eingangswerte an eine Auswerteeinheit (6) zur Analyse des Verschleißzustandes der Bauteile (1) geleitet werden, wobei hierfür auch die aktuelle Position des Schienenfahrzeuges signalverarbeitet wird,
**dadurch gekennzeichnet, dass** die aktuelle Geschwindigkeit (v) des Schienenfahrzeuges über die Zeit (t) aufgezeichnet wird, woraus ein v-t-Profil (a) erstellt wird, das mit einem hinterlegten v-t-Profil korreliert wird, um durch einen stochastischen Abgleich beider Profile (a, b) die aktuelle Position als weiteren Eingangswert für die Zustandsüberwachung zu bestimmen.

2. Verfahren nach Anspruch 1,
**dadurch gekennzeichnet, dass** mit einem hinterlegten v-t-Profil in Form eines Strecken/Haltestellen-Profils (b) korreliert wird.

3. Verfahren nach Anspruch 2,
**dadurch gekennzeichnet, dass** der Vergleich beider Profile (a; b) anhand der zeitlichen Abfolge von Haltestellenpositionen durchgeführt wird, an denen über eine definierte Zeitdauer die Geschwindigkeit null ist.

4. Verfahren nach Anspruch 1,
**dadurch gekennzeichnet, dass** dem hinterlegten v-t-Profil datensatzmäßig weitere durch Sensoren (2a-2c) ermittelte auf die Bauteile (1) einwirkende Belastungsdaten zugeordnet werden.

5. Verfahren nach Anspruch 4,
**dadurch gekennzeichnet, dass** als weitere Belastungsdaten die auf die Radsätze des Schienenfahrzeugs einwirkenden Beschleunigungen aufgezeichnet werden, um hierüber fehlerhafte Streckenabschnitte zu identifizieren.

6. Elektronische Einrichtung zur Zustandsüberwachung von Bauteilen (1) eines Schienenfahrzeuges, in denen Sensoren (2a-2c) zur Erfassung von auf die Bauteile (1) einwirkende Belastungen betrieben werden, deren Messwerte als Eingangswerte an eine Auswerteeinheit (6) zur Analyse des Verschleißzustandes der Bauteile (1) geleitet werden, wobei hierfür auch die aktuelle Position des Schienenfahrzeuges signalverarbeitet werden,
**dadurch gekennzeichnet, dass** eine Aufzeichnungseinheit (3) die aktuelle Geschwindigkeit (v) des Schienenfahrzeuges über die Zeit (t) aufzeichnet, woraus diese ein v-t-Profil (a) erstellt, das eine Vergleichseinheit (4) mit einem hinterlegten v-t-Profil vergleicht, um durch einen stochastischen Abgleich beider Profile (a) die aktuelle Position als weiteren Eingangswert für die Zustandsüberwachung durch die Auswerteeinheit (6) zu bestimmen.

7. Elektronische Einrichtung nach Anspruch 6,
**dadurch gekennzeichnet, dass** das hinterlegte v-t-Profil ein Strecken/Haltestellen-Profil (b) ist.

8. Elektronische Einrichtung nach Anspruch 6 oder 7,
**dadurch gekennzeichnet, dass** als Aufzeichnungseinheit (3) für die aktuelle Geschwindigkeit (v) des Schienenfahrzeuges über die Zeit (t) der zentrale Datenlogger des Schienenfahrzeuges dient.

9. Elektronische Einrichtung nach Anspruch 8,
**dadurch gekennzeichnet, dass** das hinterlegte v-t-Profil ebenfalls im Datenlogger oder in der Auswerteeinheit (6) für die Zustandsüberwachung hinterlegt ist.

10. Schienenfahrzeug mit einer elektronischen Einrichtung nach einem der Ansprüche 6 bis 9.

11. Computerprogrammprodukt für eine elektronische Einrichtung nach einem der Ansprüche 6 bis 9, welche nach einem Verfahren nach einem der Ansprüche 1 bis 5 betreibbar ist, wobei die Routine zur Zustandsüberwachung der Bauteile (1) durch entsprechende in einer Software hinterlegte Steuerungsbefehle umgesetzt ist.

12. Datenträger mit einem Computerprogrammprodukt nach Anspruch 11.

## Claims

1. A method for state monitoring of components (1) of a rail vehicle, in which sensors (2a-2c) are operated in order to detect loads acting on the components (1), the measured values of which loads are passed as input values to an evaluation unit (6) for analysis of the wear state of the components (1), with the current position of the rail vehicle also being signal-processed for this purpose,
**characterized in that** the current speed (v) of the rail vehicle is recorded over the time (t) from which a v-t profile (a) is created, which is correlated with a stored v-t profile in order to determine the current position as a further input value to the state monitoring, by stochastic matching of the two profiles (a, b).

2. The method as claimed in claim 1,
**characterized in that** correlation is carried out with a stored v-t profile in the form of a track section/stopping point profile (b).

3. The method as claimed in claim 2,
**characterized in that** the comparison of the two profiles (a; b) is carried out on the basis of the time sequence of stopping-point positions at which the speed is zero over a defined time period.

4. The method as claimed in claim 1,
**characterized in that** further load data, which is determined by sensors (2a-2c) and acts on the components (1), is associated, in terms of data records, with the stored v-t profile.

5. The method as claimed in claim 4,
**characterized in that** the accelerations acting on the wheel sets of the rail vehicle are recorded as further load data, in order in this way to identify faulty track sections.

6. An electronic device for state monitoring of components (1) of a rail vehicle, in which sensors (2a-2c) are operated in order to detect loads acting on the components (1), the measured values of which loads are passed as input values to an evaluation unit (6) for analysis of the wear state of the components (1), with the current position of the rail vehicle also being signal-processed for this purpose,
**characterized in that** a recording unit (3) records the current speed (v) of the rail vehicle over the time (t), from which said recording unit (3) creates a v-t profile (a) which a comparison unit (4) compares with a stored v-t profile in order to determine the current position as a further input value to the state monitoring by the evaluation unit (6), by stochastic matching of the two profiles (a).

7. The electronic device as claimed in claim 6,
**characterized in that** the stored v-t profile is a track section/stopping point profile (b).

8. The electronic device as claimed in claim 6 or 7,
**characterized in that** the central data logger of the rail vehicle is used as the recording unit (3) for the current speed (v) of the rail vehicle over the time (t).

9. The electronic device as claimed in claim 8,
**characterized in that** the stored v-t profile is likewise stored in the data logger or in the evaluation unit (6) for state monitoring.

10. A rail vehicle having an electronic device as claimed in one of claims 6 to 9.

11. A computer program product for an electronic device as claimed in one of claims 6 to 9, which can be operated using a method as claimed in one of claims 1 to 5 with the routine for state monitoring of the components (1) being implemented by appropriate control commands stored in softwear.

12. A data storage medium having a computer program product as claimed in claim 11.

## Revendications

1. Procédé de contrôle de l'état de parties (1) constitutives d'un véhicule ferroviaire, dans lequel on fait fonctionner, pour la détection de charges agissant sur les parties (1) constitutives, des capteurs (2a-2c), dont les valeurs de mesure sont envoyées comme valeurs d'entrée à une unité ( 6 ) d'exploitation pour l'analyse de l'état d'usure des parties ( 1 ) constitutives, la position présente du véhicule ferroviaire étant traitée également par signal à cet effet,
**caractérisé en ce que** l'on enregistre la vitesse ( v ) présente du véhicule ferroviaire en fonction du temps ( t ), on en établit un profil v-t ( a ), qui est en corrélation avec un profil v-t mémorisé, pour, par un alignement stochastique des deux profils ( a, b ), déterminer la position présente comme autre valeur d'entrée pour le contrôle de l'état.

2. Procédé suivant la revendication 1,
**caractérisé en ce que** l'on effectue une corrélation avec un profil v-t mémorisé sous la forme d'un profil ( b ), position sur voie / position d'arrêt.

3. Procédé suivant la revendication 2,
**caractérisé en ce que** l'on effectue la comparaison de profils ( a, b ) au moyen de la succession dans le temps des positions d'arrêt où, pendant une durée définie, la vitesse est nulle.

4. Procédé suivant la revendication 1,
**caractérisé en ce que** l'on affecte au profil v-t mémorisé, en jeux de données, d'autres données de charge agissant sur les parties ( 1 ) constitutives et déterminées par les capteurs ( 2a-2c ).

5. Procédé suivant la revendication 4,
**caractérisé en ce que** l'on enregistre, comme autres données de charge, les accélérations agissant sur les boggies du véhicule ferroviaire, pour identifier ainsi des tronçons de voie défectueux.

6. Dispositif électronique de contrôle de l'état de parties ( 1 ) constitutives d'un véhicule ferroviaire, dans lequel des capteurs ( 2a-2c ) fonctionnent pour la détection de charges agissant sur les parties ( 1 ) constitutives, capteurs dont les valeurs de mesure sont envoyées comme valeurs d'entrée à une unité ( 6 ) d'exploitation pour l'analyse de l'état d'usure des parties ( 1 ) constitutives, la position présente du véhicule ferroviaire étant traitée également en signal à cet effet,
**caractérisé en ce qu'**une unité ( 3 ) d'enregistrement enregistre la vitesse ( v ) présente du véhicule ferroviaire en fonction du temps ( t ), en établit un profil v-t ( a ) qu'une unité ( 4 ) de comparaison compare à un profil v-t mémorisé, pour déterminer, par l'unité ( 6 ) d'exploitation par l'alignement stochastique des deux profils ( a ), la position présente comme autre valeur d'entrée pour le contrôle de l'état.

7. Dispositif électronique suivant la revendication 6,
**caractérisé en ce que** le profil v-t mémorisé est un profil ( b ) de position sur la voie / d'arrêt.

8. Dispositif électronique suivant la revendication 6 ou 7,
**caractérisé en ce que** l'enregistreur chronologique central de données du véhicule ferroviaire sert d'unité ( 3 ) d'enregistrement de la vitesse ( v ) présente du véhicule ferroviaire en fonction du temps ( t ).

9. Dispositif électronique suivant la revendication 8,
**caractérisé en ce que** le profil v-t mémorisé est mémorisé également dans l'enregistreur chronologique de données ou dans l'unité ( 6 ) d'exploitation pour le contrôle de l'état.

10. Véhicule ferroviaire ayant un dispositif électronique suivant l'une des revendications 6 à 9.

11. Produit de programme d'ordinateur pour un dispositif électronique suivant l'une des revendications 6 à 9, qui peut fonctionner par un procédé suivant l'une des revendications 1 à 5, la systématique de contrôle de l'état des parties ( 1 ) constitutives étant transformée par des instructions de commande correspondantes mémorisées dans un logiciel.

12. Support de données ayant un produit de programme d'ordinateur suivant la revendication 11.
